(19) Europäisches Patentamt / European Patent Office / Office européen des brevets

(11) **EP 2 674 592 A1**

(12) **EUROPÄISCHE PATENTANMELDUNG**

(43) Veröffentlichungstag:
**18.12.2013   Patentblatt 2013/51**

(21) Anmeldenummer: **12171899.3**

(22) Anmeldetag: **14.06.2012**

(51) Int Cl.:
*F02C 6/18* (2006.01)          *F03D 9/00* (2006.01)
*F01D 15/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Lenk, Uwe**
**08064 Zwickau (DE)**
• **Tremel, Alexander**
**91052 Erlangen (DE)**

(54)   **Gasturbinenprozess mit Aufwindkraftwerk**

(57)   Die Erfindung betrifft ein Kraftwerk (1) umfassend wenigstens eine Gasturbine (2) sowie wenigstens einen mit einer Stromerzeugungseinheit (11) versehenen Turm (12) zur Erzeugung von elektrischem Strom durch einen luftdynamischen Aufwind in dem Turm (12), wobei die Gasturbine (2) mit dem Turm (12) derart fluidtechnisch gekoppelt ist, dass wenigstens ein Teil des Abgases der Gasturbine (2) bei Betrieb durch den Turm (12) strömen kann.

## FIG 1

EP 2 674 592 A1

**Beschreibung**

Die vorliegende Erfindung betrifft ein Kraftwerk umfassend wenigstens eine Gasturbine sowie wenigstens einen mit einer Stromerzeugungseinheit versehenen Turm zur Erzeugung von elektrischem Strom durch einen luftdynamischen Aufwind in dem Turm, wie auch ein Verfahren zum Betrieb eines solchen Kraftwerks.

Zur Erhöhung des Prozesswirkungsgrades einer zur Stromerzeugung vorgesehenen Gasturbine, wird diese typischerweise mit einem gekoppelten Dampfturbinenkreislauf im Sinne eines Gas- und Dampfturbinenprozesses (GuD-Prozess) betrieben. Hierbei ist die Bereitstellung von Wasser nicht nur zum Unterhalt des von einer solchen Anlage umfassten Wasser-Dampfkreislaufs erforderlich, sondern auch die damit zusammen wirkenden Kühlvorrichtungen bedürfen eventuell der Bereitstellung von Kühlwasser. Obwohl der Wasser-Dampfkreislauf prinzipiell ein geschlossenes System darstellt, müssen dennoch im praktischen Betrieb kontinuierlich Wasserverluste ausgeglichen werden ("make up"-Wasserbedarf). Dies führt zu einem anhaltenden Wasserbedarf von 1 bis 2 % der gesamten Dampfmenge bzw. 60 bis 70 kg pro erzeugter Megawattstunde.

Der Betrieb von Gasturbinen zur Stromerzeugung in Verbindung mit einem Dampfturbinenkreislauf stellt jedoch in sehr trockenen Regionen, bspw. Wüstenregionen, eine hohe Herausforderung dar. Vielmals kann in solchen Gebieten eine allgemeine Wasserversorgung nur unter hohen Kosten gewährleistet werden, so dass eine Nachfrage von größeren Mengen an Wasser zur industriellen Verwendung durch die örtliche Infrastruktur oftmals nicht wirtschaftlich bedient werden kann. Insbesondere dann, wenn große Mengen an Wasser, etwa zur Kühlung mittels mit Wasser versorgter Kühlvorrichtungen erforderlich sind, ist die örtliche Wasserinfrastruktur normalerweise nicht in der Lage, diesen Anforderungen gerecht zu werden.

Vorliegend soll es deshalb Aufgabe der Erfindung sein, einen kombinierten Gasturbinenprozess zu beschreiben, der dazu in der Lage ist, die aus dem Stand der Technik bekannten Nachteile zu vermeiden. Insbesondere soll ein kombinierter Gasturbinenprozess beschrieben werden, der einen Betrieb auch in sehr trockenen Regionen der Erde ermöglicht. Insbesondere soll ein Betrieb unter relativ geringen Anforderungen an die Wasserbereitstellung erfolgen. Weiterhin soll insbesondere eine effiziente Kraftwerkslösung vorgeschlagen werden, die sich eines kombinierten Gasturbinenprozesses bedient, der keinen Wasserdampfkreislauf erfordert.

Diese der Erfindung zugrunde liegenden Aufgaben werden durch ein Kraftwerk gemäß Anspruch 1 sowie ein Verfahren zum Betrieb eines solchen Kraftwerks gemäß Anspruch 15 gelöst.

Insbesondere werden diese der Erfindung zugrunde liegenden Aufgaben durch ein Kraftwerk gelöst, welches wenigstens eine Gasturbine sowie wenigstens einen mit einer Stromerzeugungseinheit versehenen Turm zur Erzeugung von elektrischem Strom durch einen luftdynamischen Aufwind in den Turm umfasst, wobei die Gasturbine mit dem Turm derart fluidtechnisch gekoppelt ist, das wenigstens ein Teil des Abgases der Gasturbine bei Betrieb durch den Turm strömen kann.

Weiterhin werden die der Erfindung zugrunde liegenden Aufgaben durch ein Verfahren zum Betrieb eines Kraftwerks gelöst, welches wenigstens eine Gasturbine sowie wenigstens einen mit einer Stromerzeugungseinheit versehenen Turm zur Erzeugung von elektrischem Strom durch einen luftdynamischen Aufwind in dem Turm umfasst, wobei bei Betrieb der Gasturbine dem Turm derart Abgas zugeleitet wird, dass mindestens ein Teil des Abgases durch den Turm strömt und elektrischer Strom mittels der Stromerzeugungseinheit erzeugt werden kann.

An dieser Stelle sei darauf hingewiesen, dass der Begriff der Gasturbine in seiner breitesten Bedeutung verstanden werden soll. Insbesondere sind hierbei auch mit Wasserstoff als Brennstoff betriebene Gasturbinen mit umfasst.

Ausführungsgemäß sind die von dem wenigstens einen Turm umfassten Stromerzeugungseinheiten typischerweise als turbinenbetriebene Generatoren ausgebildet. Andere Stromerzeugungseinheiten sind jedoch auch denkbar.

Ein mit einer Stromerzeugungseinheit versehener Turm zur Erzeugung von elektrischem Strom durch einen luftdynamischen Aufwind in dem Turm soll im Folgenden auch als Aufwindkraftwerk bezeichnet werden.

Aufgrund der fluiddynamischen Kopplung einer Gasturbine mit dem Turm ist es möglich, auf die Verwendung von Wasser im Wesentlichen zu verzichten. Insbesondere kann auf diese Art und Weise auf die Verwendung von Kühlwasser bzw. von Wasser in einem Wasser-Dampfkreislauf verzichtet werden. Die Kopplung von Gasturbine und Aufwindkraftwerk erfolgt lediglich luftdynamisch. Damit eignet sich das bezeichnete Kraftwerk insbesondere auch zum Betrieb in sehr trockenen Regionen der Erde.

Weiterhin erlaubt die Erfindung die Erweiterung des Lastfensters einer Gasturbine, die zwischen einem unteren Bereich der Minimallastanforderung und einem oberen Bereich der Maximalleistungsgrenze betrieben wird. Aufgrund der zusätzlichen und, wie weiter unten noch ausgeführt werden wird, auch teilweise unabhängigen Erzeugung von elektrischer Leistung mittels des Aufwindkraftwerks kann der obere Bereich der maximalen Leistungsgrenze noch erweitert werden, wodurch eine höhere elektrische Gesamtleistungsabgabe des kombinierten Kraftwerks ermöglicht wird. Ferner kann das Lastfenster bei ausschließlichem Betrieb des Aufwindkraftwerks auch nach unten zu kleineren Leistungsabgaben noch abgesenkt werden. Dadurch wird einerseits also das Lastfenster im Vergleich zu einem Simple-Cycle-Gasturbinenkraftwerk erweitert und andererseits die Flexibilität des Betriebs deutlich erhöht.

Weiterhin kann aufgrund der Kombination von Gasturbinenprozess und luftdynamisch gekoppeltem Aufwindkraftwerk der elektrische Eigenbedarf auch zu Zeiten außerhalb des Leistungsbetriebes der Gasturbine, etwa also beim Anfahren, Abkühlen oder beim Standby, mittels der elektrischen Leistung gedeckt werden, welche die Stromerzeugungseinheit des Aufwindkraftwerks bereitstellen kann. Dies ist insbesondere dann der Fall, wenn die Wärme des Abgases der Gasturbine thermisch zwischengespeichert wird.

Erfindungsgemäß wird also die Funktionalität und Flexibilität eines Simple-Cycle-Gasturbinenkraftwerks durch das luftdynamisch angekoppelte Aufwindkraftwerk erweitert. Gemäß einer umgekehrten Sichtweise kann auch davon geredet werden, dass ein Aufwindkraftwerk durch eine externe Wärmequelle funktionell erweitert wird. So dient nämlich das heiße Abgas, welches bei Befeuerung der Gasturbine aus dieser austritt, dazu, die in dem Aufwindkraftwerk ablaufenden Konvektionsvorgänge aktiv anzutreiben. Gemäß dieser Sichtweise wird der in dem Turm des Aufwindkraftwerks ablaufende Konvektionsprozess durch die thermische Wärme des Abgases der Gasturbine unterstützt oder sogar unterhalten. Damit ist es also auch möglich, das Aufwindkraftwerk ohne die sonst typische solarthermische Kollektorfläche zu betreiben. Diese solarthermische Kollektorfläche, die typischerweise zur Wandlung von solarer Strahlung in Wärme dient, die wiederum konvektive Luftströmungsprozesse unterstützt, kann folglich durch eine gezielte fluidtechnische Kopplung zwischen Gasturbine und dem von dem Aufwindkraftwerk erfassten Turm ersetzt werden. Ebenso ist es möglich, dass keine vollständige Ersetzung dieser thermischen Prozesse, sondern lediglich eine zeitweise Unterstützung durch das von der Gasturbine ausgestoßene Abgase erfolgt. Anders als beim herkömmlichen kombinierten Gas- und Dampfturbinenprozess, wird vorliegend also ein kombinierter Gas- und Gasturbinenprozess beansprucht.

Bei der erfindungsgemäß vorgeschlagenen fluidtechnischen Kopplung von Gasturbine und Turm des Aufwindkraftwerks ist darauf zu achten, dass von der Gasturbine ausgestoßenes Abgas bei normalen Betriebsbedingungen ein sehr hohes Temperaturniveau von typischerweise über 400°C aufweist. Folglich ist es normalerweise erforderlich, das Abgas, bevor es in den Turm eingeleitet wird, soweit thermisch zu konditionieren, dass keine Materialschäden am Turm auftreten können. Die thermische Konditionierung kann hierbei durch einen geeigneten Wärmeaustauschprozess erfolgen bzw. durch einen Mischungsprozess, der die Verminderung des Gesamttemperaturniveaus des Abgases bzw. des Gemischs mit Luft erreichen kann. Andererseits ist es auch möglich, den Turm soweit mit temperaturfesten Materialien zu verkleiden, dass eine Einleitung des Abgases auf verhältnismäßig hohem Temperaturniveau zu keinen Materialschäden führt. Dies mag jedoch mitunter zu hohen und damit nicht wirtschaftlichen Materialkosten führen.

An dieser Stelle sei angemerkt, dass im Rahmen dieser Erfindung kein ausdrücklicher begrifflicher Unterschied gemacht wird zwischen einem Betrieb des Aufwindkraftwerks mit Luft, mit Abgas oder mit einem Gemisch von beiden.

Gemäß einer ersten bevorzugten Ausführungsform der Erfindung ist vorgesehen, dass die Gasturbine mit dem Turm des Aufwindkraftwerks wenigstens teilweise mittels einer Strömungsleitung fluidtechnisch gekoppelt ist. Die Strömungsleitung erlaubt eine gezielte und kontrollierte fluidtechnische Kopplung zwischen der Gasturbine und dem Turm des Aufwindkraftwerks. Demzufolge ist etwa eine gezielte strömungstechnische Einleitung der Abgase der Gasturbine in den Turm möglich.

Gemäß einer Weiterführung dieser Idee weist die Strömungsleitung eine verschließbare Abzweigleitung auf, über welche das Abgas einem Strömungsweg zugeleitet werden kann, welche nicht in den Turm mündet, sondern insbesondere in die freie Umgebung. Demzufolge kann bspw. etwa bei Wartungsarbeiten an dem Aufwindkraftwerk das Abgas aus der Gasturbine einem anderen Strömungsweg zugeleitet werden, ohne dass es in den Turm des Aufwindkraftwerks eingeleitet wird. Zudem ist auch denkbar, dass das Abgas über den anderen Strömungsweg weiteren thermischen Prozessen zugeleitet wird, die nicht mit der Stromerzeugung in dem Aufwindkraftwerk in unmittelbarer Verbindung stehen. So kann bspw. das Abgas auch thermischen Industrieprozessen zugeleitet werden, wie sie etwa in der Erdöl aufbereitenden Industrie üblich sind.

Gemäß einer weiteren bevorzugten Ausführungsform ist vorgesehen, dass die Strömungsleitung eine Abschlussvorrichtung umfasst, welche die Strömungsleitung fluidtechnisch verschließt, insbesondere derart verschließt, dass kein Abgas dem Turm zugeleitet werden kann. Diese Ausführungsform gewährleistet einen gezielten und kontrollierten Abschluss des Abgases, um dieses vor der Zuleitung in den Turm des Aufwindkraftwerks zu bewahren. Insbesondere ist die Abschlussvorrichtung der Strömungsleitung mit einer Abschlussvorrichtung der verschließbaren Abzweigleitung steuerungstechnisch verbunden.

Gemäß einer weiteren bevorzugten Ausführungsform der Erfindung ist vorgesehen, dass die Strömungsleitung einen Strömungsabschnitt aufweist, über welchen Frischluft dem Abgas zugeführt werden kann, damit sie sich mit dem Abgas vermischt, bevor und/oder während das Gemisch dem Turm zugeleitet wird. Der ausführungsgemäße Strömungsabschnitt gewährleistet also einen Mischvorgang zwischen dem Abgas und Frischluft aus der Umgebung, die im Vergleich zum Abgas ein deutlich geringeres Temperaturniveau aufweist. Während des Mischvorganges wird folglich das Abgas hinsichtlich seines Temperaturniveaus soweit konditioniert, dass das Gesamtgasgemisch ein Temperaturniveau erreichen kann, welches für die Einleitung in den Turm des Aufwindkraftwerks geeignet ist ohne Materialschäden am Turm befürchten zu müssen. Insbesondere ist das Temperaturniveau des Gesamtgasgemisches ausreichend gering, um keine Materialschäden durch thermische Einwirkung an den Materialien des Turms befürchten zu müssen.

Gemäß einer Weiterführung dieser Ausführungsform ist vorgesehen, dass der Strömungsabschnitt am Ende der Strömungsleitung angeordnet ist, insbesondere unterhalb des Turms an dessen Basis. Die Basis ist hierbei als der Fußbereich des Turmes des Aufwindkraftwerks zu verstehen. Hierbei kann der Fußbereich vergleichbar einem Kühlturm offen ausgestaltet sein bzw. teilweise oder auch vollständig ummantelt.

Gemäß einer besonderen Ausführungsform kann der Strömungsabschnitt als Mischbehältnis ausgebildet sein, in welchem das Abgas mit der Frischluft in einem vorbestimmten Verhältnis gemischt werden und anschließend über darin angebrachten Strömungsöffnungen als Gesamtgasgemisch ausfließen kann. Besonders bevorzugt mündet auch die Strömungsleitung in die Basis des Turms, insbesondere derart, dass die Strömungsrichtung der Längenerstreckungsrichtung des Turms entspricht, und verursacht dort aufgrund der hohen Strömungsgeschwindigkeiten des aus der Strömungsleitung austretenden Abgases einen fluiddynamischen Sogeffekt auf die Luft der Umgebung. Diese wird als Frischluft mit dem aus der Strömungsleitung austretenden Abgas gemischt und strömt folglich zusammen mit dem Abgas in Form eines Gesamtgasgemisches durch den Turm. Neben der Verminderung des Gesamttemperaturniveaus wird auf diese Weise auch eine Erhöhung des Gesamtmassenstroms erreicht, der zur elektrischen Stromerzeugung mittels des Aufwindkraftwerks zur Verfügung steht.

Je nach sich ausbildender Temperaturdifferenz, Gesamtmassenstrom, wie auch der Geometrie des Turmes kann so ein geeigneter konvektiver Aufwind in dem Turm erzeugt werden, der zur Stromerzeugung dient. Gemäß einer besonderen Ausführungsform kann auch aufgrund der Mischungsvorgänge zwischen Abgas und Frischluft auf ein Frischluftgebläse vollständig verzichtet werden, wodurch der Gesamtwirkungsgrad des kombinierten Kraftwerks nochmals erhöht wird. Ebenfalls kann ein solches Gebläse auch unterstützend vorgesehen sein.

Entsprechend einer besonders bevorzugten Ausführungsform der vorliegenden Erfindung ist vorgesehen, dass die Strömungsleitung mit einem thermischen Wärmespeicher fluidtechnisch derart gekoppelt ist, dass das Abgas, bevor es dem Turm zugeleitet wird, mit dem Wärmespeicher in thermischem Kontakt ist. Der thermische Wärmespeicher erlaubt die Zwischenspeicherung von aus dem Abgas entnommener thermischer Wärme, so dass diese zu einem zeitlich nachfolgenden Zeitpunkt aus dem Wärmespeicher wieder entnommen und nutzbar gemacht werden kann. Der thermische Wärmespeicher erlaubt folglich eine funktionelle Erweiterung für einen zeitlich flexiblen Betrieb des Kraftwerks. Der ausführungsgemäße Wärmespeicher kann zur Speicherung von latenter und/oder fühlbarer Wärme ausgebildet sein. Hierbei kann bspw. der Wärmespeicher als Betonwärmespeicher mit Luftkanälen, als Gesteinsschüttung, als Wirbelschicht oder als flüssige Salzmischung zur Speicherung von fühlbarer Wärme ausgebildet sein. Weiterhin kann der Wärmespeicher als ein Salz oder Metall ausgebildet sein, welches während eines Phasenüberganges aufgeschmolzen wird (latenter Wärmespeicher). Weiterhin ist auch die Nutzung einer reversiblen chemischen Reaktion zur Wärmespeicherung möglich. Der Wärmespeicher kann insbesondere so ausgebildet sein, dass das heiße Gasturbinengas ohne weitere Temperaturbeeinflussung zu einem Strömungsabschnitt der Strömungsleitung geführt wird, um dort mit Frischluft vermischt zu werden. Ist der thermische Wärmespeicher voll, d.h. hat er das Temperaturniveau des Abgases vollständig angenommen, strömt das Abgas thermisch nicht weiter konditioniert zu diesem Strömungsabschnitt.

Ist nun während sich ändernder Betriebsbedingungen der Gasturbine die Abgastemperatur vermindert bzw. das Abgas nicht mehr vorhanden, etwa weil die Gasturbine nicht betrieben ist, kann dennoch weiterhin Luft thermisch mittels dem Wärmespeicher behandelt werden, um nachfolgend in den Turm des Aufwindkraftwerks zur Stromerzeugung eingeleitet zu werden.

Gemäß einer modifizierten Ausführungsform dieser Idee ist vorgesehen, dass der thermische Wärmespeicher unterhalb des Turms an dessen Basis angeordnet ist, insbesondere derart angeordnet ist, dass thermische Wärme durch den Wärmespeicher über eine vorbestimmte Fläche unmittelbar an die Umgebung der Basis abgegeben werden kann. Ausführungsgemäß kann also bspw. die über dem thermischen Wärmespeicher befindliche Luft soweit erwärmt werden, dass diese durch thermische Konvektion dem Turm zuströmt. Aufgrund dieser Konvektionsprozesse wird aus der Umgebung Frischluft angesogen, wodurch ein Mischprozess unterhalten wird, der über dem thermischen Wärmespeicher erfolgt. Die Anordnung des thermischen Wärmespeichers im Bereich der Basis des Turms kann wiederum die Vermeidung von zusätzlichen Frischluftgebläsen zur Folge haben, so dass ein besonders energieeffizientes Kraftwerk bereitgestellt werden kann. Durch die ausführungsgemäß vorgesehene räumliche Nähe zwischen Turm und thermischen Wärmespeichern können zudem die thermischen Verlustleistungen weitgehend gering gehalten werden, wodurch die thermische Gesamteffizient des Kraftwerks wiederum verbessert werden kann.

Gemäß einer bevorzugten Weiterführung dieser Ausführungsform ist vorgesehen, dass die vorbestimmte Fläche des thermischen Wärmespeichers wenigstens 30 %, insbesondere wenigstens 50 % der senkrecht auf den Erdboden gerichteten Projektion der Eintrittsöffnung des Turms überdeckt. Folglich zeichnet sich die vorbestimmte Fläche des Wärmespeichers durch ihre Größe aus, die einen Anteil der Projektion der Eintrittsöffnung des Turms überdecken kann. Damit ist gewährleistet, dass die Wärmeabgabe durch den thermischen Wärmespeicher über die Fläche erfolgen kann, wodurch das Temperaturniveau des in den Turm einströmenden Gemisches von Abgas und Luft bzw. von thermisch konditionierter Luft und ausreichend groß ist, um die erforderlichen Konvektionsvorgänge in dem Turm zur Stromerzeugung zu unterstützen bzw. unterhalten. Aufgrund der Flächengröße kann eine gute Wärmeabgabe an die Umgebung erfolgen sowie ein effizienter Betrieb des Aufwindkraftwerks gewährleistet werden.

Ein effizienter Betrieb ist insbesondere auch dann der Fall, wenn nach einer Betriebszeit der Gasturbine der thermische Wärmespeicher aufgeladen ist und anschließend bei abgeschalteter Gasturbine Wärme kontinuierlich aus dem thermischen Wärmespeicher an Luft der Umgebung abgegeben wird. Demgemäß kann die Stromerzeugungseinheit im Turm im Wesentlichen kontinuierlich betrieben werden, auch dann, wenn die Gasturbine selbst nicht mehr betrieben wird.

Gemäß einer weiteren Ausführungsform der Erfindung ist vorgesehen, dass der Wärmespeicher dazu geeignet ist, thermische Wärme bei einem Temperaturniveau von wenigstens 300°C insbesondere von wenigstens 400°C zu speichern. Folglich kann der Wärmespeicher verhältnismäßig viel thermische Wärme zwischenspeichern, die auch über einen Zeitraum von mehreren Stunden außerhalb der Betriebszeiten der Gasturbine den Betrieb der Stromerzeugungseinheit im Aufwindkraftwerk aufrechterhalten kann. Wie oben bereits ausgeführt, kann thermische Wärme auf dem ausführungsgemäßen Temperaturniveau in geeigneter Weise durch Betonstein, Salz oder Metall zwischengespeichert werden.

Gemäß einem weiteren Aspekt der vorliegenden Erfindung kann vorgesehen sein, dass eine Vielzahl an Austrittsöffnungen von dem Wärmespeicher aufgewiesen werden, aus welchen das Abgas zur Mischung mit Frischluft ausströmen, insbesondere frei ausströmen kann. Die Vielzahl an Austrittsöffnungen gewährleistet eine gezielte Mischung des ausströmenden Gases mit Frischluft, so dass eine geeignete Mischung erfolgen kann. Ein freies Ausströmen entspricht hierbei einem strömungstechnisch in Strömungsrichtung nicht begrenztem Ausströmverhalten, also einem Ausströmen, welches nicht durch Strömungswiderstände beeinflusst wird. Gemäß einer Weiterführung dieser Idee kann die Vielzahl an Ausführungsöffnungen auch unterhalb des Turms an dessen Basis angeordnet sein. Folglich kann eine gezielte Mischung des Abgases mit Frischluft bereits im Basisbereich des Turms erreicht werden, so dass das Gesamtgasgemisch ohne weiteren erforderlichen Mischungsprozess in den Turm zur Stromerzeugung eintreten kann.

Ausführungsgemäß ist auch möglich, dass das Kraftwerk keinen Strömungsgenerator aufweist, welcher die zur Mischung mit dem Abgas vorgesehene Frischluft mit einer Strömung beaufschlagt. Ausführungsgemäß entsteht die Frischluftströmung zur Mischung mit dem Abgas folglich lediglich aufgrund von Sekundäreffekten, bspw. durch Temperatur- bzw. Druckunterschiede. Diese können bspw. bei geeignetem Strömungsverhalten des Abgases auftreten, wodurch durch strömungstechnische Druckunterschiede eine Mischung mit Frischluft konvektiv erfolgen kann. Ausführungsgemäß kann folglich auf den Strömungsgenerator verzichtet werden, wodurch die Gesamteffizienz des Kraftwerks verbessert wird.

Gemäß einer weiteren Ausführungsform der Erfindung ist vorgesehen, dass der Turm ein Höhenniveau von höchstens 200 m, insbesondere von höchstens 150 m aufweist. Zwar ist es bekannt, dass die in einem Aufwindkraftwerk erzeugte Leistung signifikant von der Turmhöhe abhängig ist, doch steht ausführungsgemäß der konstruktive Aufwand und die damit verbundenen Investitionskosten im Vordergrund. So ist es bspw. auch möglich, für das Aufwindkraftwerk standardgemäß gebaute Industriekamine mit einer Höhe von 100 bis 150 m vorzusehen. Bei einer Turmhöhe von 150 m in Kombination mit einer Gasturbine, die eine Nennleistung von 200 MW aufweist, ist so bspw. eine elektrische Leistungsabgabe durch die Stromerzeugungseinheit des Aufwindkraftwerks von ca. 1,5 MW erreichbar. Diese Energiemenge ist insbesondere ausreichend, um die zeitliche Leistungsabgabe des Kraftwerks gleichmäßiger zu gestalten, wie auch eine elektrische Leistungsabgabe zum Eigenbedarf bei Stillstand der Gasturbine zu sichern.

Gemäß einer ersten bevorzugten Ausführungsform des erfindungsgemäßen Verfahrens ist vorgesehen, dass dem Abgas Frischluft beigemischt wird, bevor es dem Turm zugeleitet wird, insbesondere eine solche Menge an Frischluft beigemischt wird, dass das Temperaturniveau des Gemisches höchstens 200°C, insbesondere höchstens 120°C beträgt, wenn es dem Turm zuströmt. Durch diese Temperaturerniedrigung des Gesamtgemisches von Abgas und Frischluft kann gewährleistet werden, dass das vom Turm umfasste Material keine unerwarteten thermischen Schäden erfährt. Weiterhin ist dieser Temperaturbereich besonders geeignet, in dem Turm des Aufwindkraftwerks eine ausreichend große konvektive Strömung zu erzeugen, die für eine effiziente Stromerzeugung mittels der Stromerzeugungseinheit nutzbar gemacht werden kann.

Nachfolgend sollen anhand von Figuren einzelne Ausführungsformen der Erfindung erläutert werden. Hierbei stellen die auf die Ausführungsformen bezogenen Konkretisierungen keinerlei Einschränkungen hinsichtlich der allgemeinen Erfindungslehre dar. Weiterhin sind die gezeigten Figuren schematisch zu verstehen, wodurch sich wiederum keinerlei Einschränkungen einer möglichen Konkretisierung ableiten lassen.

Hierbei zeigen:

FIG 1     eine erste Ausführungsform des erfindungsgemäßen Kraftwerks in einer schematischen Schaltansicht;

FIG 2     eine weitere Ausführungsform des erfindungsgemäßen Kraftwerks in einer schematischen Schaltansicht;

FIG 3 eine weitere Ausführungsform des erfindungsgemäßen Kraftwerks in einer schematischen Schaltansicht;

FIG 4 ein Diagramm zur Darstellung der theoretischen Wirkungsgradverbesserung eines mit einem Aufwindkrafwerk gekoppelten Gasturbinenprozesses im Vergleich zu einem isolierten Simple-Cycling-Gasturbinenprozess in Abhängigkeit von der Höhe des Turmes des Aufwindkraftwerks;

FIG 5 ein Diagramm zur Darstellung der Gastemperatur nach der Mischung von Frischluft und Abgas für Abgastemperaturen von 500°C und 600°C bei verschiedenen Mischungsverhältnissen.

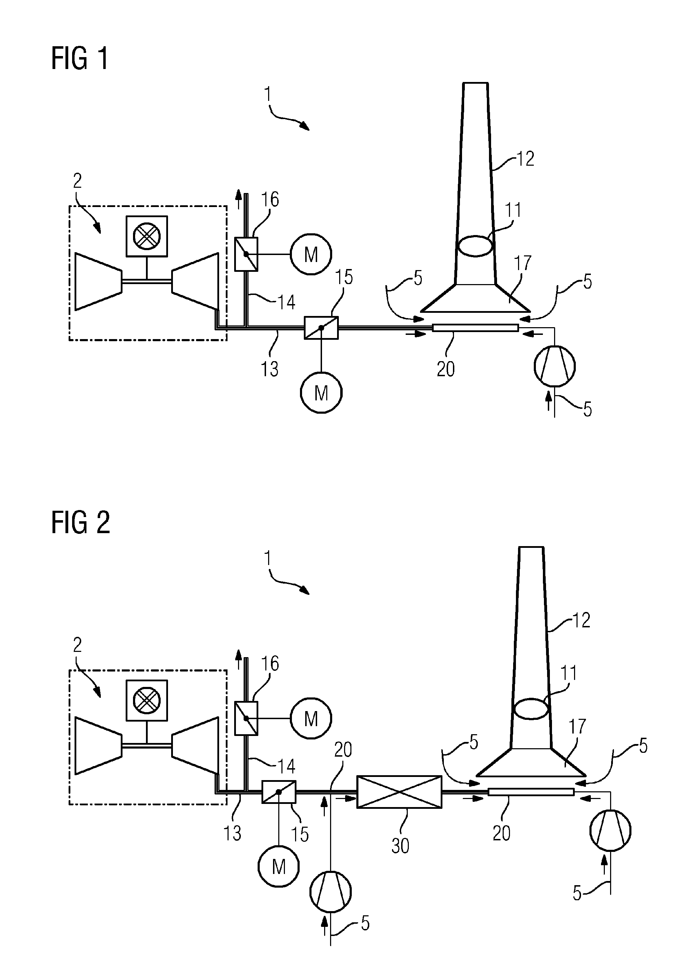

FIG 1 zeigt eine erste Ausführungsform des erfindungsgemäßen Kraftwerks 1 in einer schematischen Schaltansicht. Das Kraftwerk 1 umfasst eine Gasturbine 2, welche über eine Strömungsleitung 13 mit einem Turm 12 eines Aufwindkraftwerks fluidtechnisch gekoppelt ist. Das Aufwindkraftwerk seinerseits umfasst einen Turm 12, welcher mit einer Stromerzeugungseinheit 11 versehen ist. Typischerweise ist die Stromerzeugungseinheit 11 als ein über eine Turbine angetriebener Generator ausgebildet. Um die Luftströmung im Bereich der Basis des Turms 12 gezielt zu leiten, weist der Turm 12 einen Einströmbereich 17 auf, der eine zum Erdboden hin gerichtete Einströmöffnung aufweist, die im Vergleich zu der zum Turm 12 hin gerichteten Öffnung erweitert ausgebildet ist. Unterhalb des Einströmbereiches 17 ist ein Strömungsabschnitt 20 angeordnet, welcher dazu ausgebildet ist, das aus der Gasturbine 2 austretende Abgas mit aus der Umgebung stammenden Frischluft 5 zu vermischen. Hierzu ist der Strömungsabschnitt 20 an einer Seite mit der Strömungsleitung 13 derart gekoppelt, dass das aus der Gasturbine 2 austretende Abgas in den Strömungsabschnitt 20 einströmt. Gleichzeitig ist der Strömungsabschnitt 20 auf einer anderen Seite mit einer Frischluftzuleitung (nicht mit Bezugszeichen versehen) verbunden, über welche Frischluft 5 mittels eines Gebläses (nicht mit Bezugszeichen versehen) versorgt wird.

Weiterhin umfasst die Strömungsleitung 13 eine Abzweigleitung 14, welche durch eine Abschlussvorrichtung 16 fluidtechnisch abgeschlossen bzw. geöffnet werden kann. Die Abschlussvorrichtung 16 kann vorliegend von einem Motor angetrieben werden. Ebenso weist die Strömungsleitung 13 eine Abschlussvorrichtung 15 auf, die ebenfalls von einem Motor angetrieben werden kann. Diese Abschlussvorrichtung 15 erlaubt ebenso die Strömungsleitung 13 zu öffnen bzw. zu schließen.

Bei Betrieb der Gasturbine 2 unter Befeuerung entsteht Abgas, welches in die Strömungsleitung 13 eingeleitet wird. Dieser Vorgang kann durch einen Strömungsgenerator unterstützt werden. Je nach Stellzustand der Abschlussvorrichtungen 15 und 16 strömt das Abgas in die Strömungsleitung 13 und/oder die Abzweigleitung 14. Ist bspw. die Abzweigleitung 14 mittels der Abschlussvorrichtung 16 verschlossen, jedoch die Strömungsleitung 13 geöffnet, strömt das Abgas zu dem Strömungsabschnitt 20. Wird gleichzeitig das Gebläse zur Bereitstellung von Frischluft 5 mittels der Frischluftzuleitung betrieben, wird dem Strömungsabschnitt 20 gleichzeitig Frischluft 5 eines deutlich geringeren Temperaturniveaus als dasjenige des Abgases zugeführt. Im Strömungsabschnitt 20 erfolgt folglich eine Vermischung des Abgases mit der Frischluft 5. Nach erfolgter Vermischung bzw. während des Mischungsvorganges steigt das so hergestellte Gasgemisch aufgrund seines im Vergleich zur Umgebung höheren Temperaturniveaus nach oben und wird dem Einströmbereich 17 des Turms 12 zugeführt. Aufgrund der konvektiven Strömungsbewegung des Gasgemisches wird weiter Frischluft 5 aus der Umgebung mit in den Einströmbereich 17 angesogen. In dem Einströmbereich 17 erfolgt somit eine weiterführende Mischung von Frischluft 5 und dem aus dem Strömungsabschnitt 20 austretenden Gemisch von Abgas und Frischluft 5. Aufgrund des Druckunterschiedes zwischen der Basis des Turms 12 und der Turmspitze sowie aufgrund des herrschenden Temperaturunterschiedes von in den Einströmbereich 17 einströmendem Gasgemisch und der an der Turmspitze vorherrschenden Luft bildet sich eine konvektive Gasströmung in dem Turm 12 aus und treibt die Stromerzeugungseinheit 11 beispielsweise mechanisch zur Stromerzeugung an.

Ist in einem anderen Betriebszustand jedoch die Abschlussvorrichtung 15 der Strömungsleitung 13 verschlossen, wird dem Turm 12 des Aufwindkraftwerks kein Abgas zugeführt. Alternativ kann jedoch in einem solchen Falle das Abgas über die Abzweigleitung 14 abgeführt werden, falls die Abschlussvorrichtung 16 geöffnet ist. Bspw. kann mittels der Abzweigleitung 14 das aus der Gasturbine 2 austretende Abgas einem industriellen Prozess zur Wärmenutzung zugeführt werden.

FIG 2 zeigt eine weitere Ausführungsform der Erfindung in einer schematischen Schaltansicht, welche sich von der in FIG 1 gezeigten Ausführungsform dahingehend unterscheidet, dass in die Strömungsleitung 13 in Bezug auf die Abschlussvorrichtung 15 stromabwärts ein Wärmespeicher 30 verschaltet ist. Zwischen Abschlussvorrichtung 15 und Wärmespeicher 30 ist zudem eine Frischluftzuleitung vorgesehen, welche Frischluft 5 mittels eines Strömungsgenerators (Gebläse) der Strömungsleitung 13 zuführt. Ausführungsgemäß durchströmt folglich das aus der Gasturbine austretende Abgas nach der Abschlussvorrichtung 15 in Strömungsleitung 13 den Wärmespeicher 30 und überträgt an diesen einen Anteil an seiner Wärme. Diese thermische Energie wird in dem Wärmespeicher 30 bevorratet und steht zu einem späteren Zeitpunkt zur weiteren Entnahme zur Verfügung. Ist der Wärmespeicher 30 geladen, kann auch bei einem Stillstand der Gasturbine 2 Wärme aus dem Wärmespeicher 30 über Frischluft 5 übertragen werden, die ihrerseits wieder dem Strömungsabschnitt 20 zugeführt wird. Hierzu wird der Strömungsleitung 13 über die zwischen der Abschlussvorrichtung 15 und dem Wärmespeicher 30 angeordnete Frischluftzuleitung Frischluft 5 zugeleitet und durch den Wärmespeicher 30 geführt. Während dieser Frischluftzuleitung kann die Abschlussvorrichtung 15 geschlossen sein, so dass keine Frischluft in Richtung der Gasturbine 2 strömt. Auf ihrem Weg zu dem Strömungsabschnitt 20 durch den Wärmespeicher 30 wird thermische Wärme auf die Frischluft 5 übertragen, wodurch diese erwärmt wird. Typischerweise erreicht das Temperaturniveau der so konditionierten Frischluft 5 das Temperaturniveau des Wärmespeichers 30 annähernd. Nachfolgend erfolgt wiederum im Strömungsabschnitt 20 eine weitere Mischung mit Frischluft 5, welche aus der noch zusätzlich vorhandenen Frischluftzuleitung dem Strömungsabschnitt 20 zugeführt wird. Ebenso ist es denkbar, dass bei bestimmten Betriebsbedingungen keine zusätzliche Frischluftzuleitung in den Strömungsabschnitt 20 erfolgt. Die weiteren Betriebsschritte entsprechen der in FIG 1 gezeigten Ausführungsform.

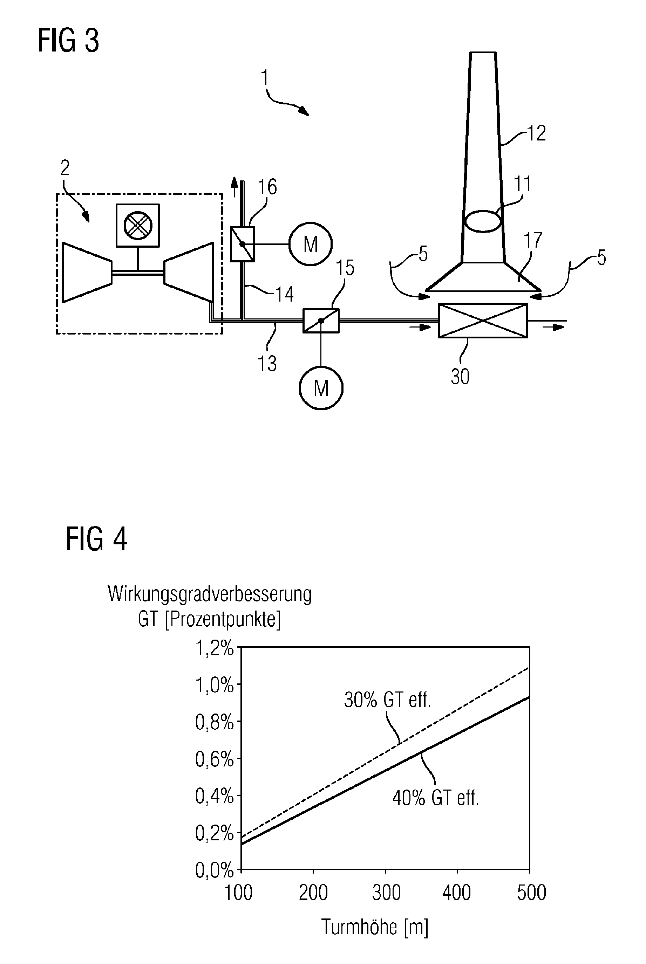

FIG 3 zeigt eine weitere Ausführungsform der Erfindung in einer schematischen Schaltansicht. Hierbei unterscheidet sich die in FIG 3 gezeigte Ausführungsform von der in FIG 2 gezeigten Ausführungsform dahingehend, dass der Strömungsabschnitt 20 durch den Wärmespeicher 30 ersetzt ist. Weiterhin umfasst die dargestellte Ausführungsform keine Frischluftzuleitungen, die in die Strömungsleitung 13 bzw. den Strömungsabschnitt 20 münden würden. Vielmehr erfolgt die Mischung von Abgas und Frischluft lediglich in dem Fußbereich zwischen Wärmespeicher und Einströmbereich 17 des Turms 12.

Bei Betrieb der Gasturbine 2 kann Abgas über die Strömungsleitung 13 bei geöffneter Abschlussvorrichtung 15 dem Wärmespeicher 30 zugeführt werden. Der Wärmespeicher 30 kann nun so ausgebildet sein, dass das ihn erwärmende Abgas durchströmt und über Öffnungen, die zu dem Einströmbereich 17 gerichtet sind, wenigstens teilweise ausströmt. Ebenso ist jedoch auch eine Ausführungsform denkbar, bei welcher das Abgas den Wärmespeicher 30 lediglich auflädt, ohne jedoch selbst in den Einströmbereich 17 des Turms 12 überführt zu werden. Vielmehr wird das Abgas gemäß einer solchen Ausführungsform durch den Wärmespeicher 30 abgeführt und steht weiteren wärmetechnischen Anwendungen zur Verfügung. Der Wärmespeicher 30 hingegen ist derart ausgebildet, dass er thermische Wärme auf seiner zum Turm 12 hin gerichteten Seite abzugeben vermag, so dass die mit dieser Fläche in thermischem Kontakt stehende Luft thermisch konditioniert wird. Diese thermische Konditionierung führt zu einer Erhöhung des Temperaturniveaus dieser Luft, so dass eine konvektive Steigströmung resultiert. Die aufgrund dieser Strömung bewegten Luftschichten werden dem Einströmbereich 17 zugeführt, wobei gleichzeitig Frischluft 5 im Bereich der Basis des Turms 12 zuströmt und mit der thermisch konditionierten Luft sich vermischt. Aufgrund der thermischen Konditionierung resultiert wiederum ein konvektiver Aufwind in dem Turm 12, welcher zur elektrischen Stromerzeugung mittels der Stromerzeugungseinheit 11 dient.

Gemäß der oben beschriebenen alternativen Ausführungsform des Wärmespeichers 13, kann dieser auch geeignete Öffnungen aufweisen, so dass über diese wenigstens ein Teil des Abgases austreten kann, um im Bereich der Basis des Turms 12 mit Frischluft 5 vermischt zu werden und dem Einströmbereich 17 des Turms 12 zugeleitet zu werden. Die weiteren prozesstechnischen Schritte entsprechen dann wiederum denen der Ausführungsformen gemäß FIG 1 und FIG 2.

FIG 4 zeigt eine graphische Darstellung der theoretische berechneten Abhängigkeit des Gesamtwirkungsgrades eines mit einem Aufwindkraftwerk gekoppelten Gasturbinenprozesses im Vergleich zum isolierten Simple-Cycle-Gasturbinenprozess in Abhängigkeit der Turmhöhe des Aufwindkraftwerks. Hierbei sind zwei unterschiedliche Geraden aufgetragen, welche unterschiedlichen elektrischen Wirkungsgraden des Simple-Cycle-Gasturbinenkraftwerks entsprechen. Die beiden Wirkungsgrade betragen 30 % (gestrichelte Linie) sowie 40 % (durchgezogene Linie). Die Berechnungen zeigen, dass bei zunehmender Turmhöhe der Gesamtwirkungsgrad des Kraftwerks 1 zunehmend erhöht wird. Beträgt die Wirkungsgradverbesserung des Gesamtprozess bei einer Turmhöhe von 100 m etwa 0,2 %, so beträgt die Wirkungsgradverbesserung bei einer Turmhöhe von 500 m zwischen 0,9 und 1,1 %.

Die in FIG 4 gezeigten funktionellen Abhängigkeiten wurden berechnet auf Basis der nachfolgenden Gesetzmäßigkeiten. Hierbei wurde für den Turmwirkungsgrad eines Aufwindkraftwerks folgender physikalischer Zusammenhang angenommen:

$$\eta = \frac{g \cdot h}{c_P \cdot T_0}$$

$g$: Erdbeschleunigung
$h$: Turmhöhe
$c_p$: spezifische isobare Wärmekapazität von Luft To: Umgebungstemperatur;

Die zur Verfügung stehende Wärmemenge lässt sich entweder aus dem Abgasstrom der Turbine nach folgender Gesetzmäßigkeit berechnen,

$$Q = \dot{m} c_P \left( T_{Rauchgas} - T_0 \right)$$

$\dot{m}$ :Massenstrom des Abgases

*TRauchgas* : Abgastemperatur der Gasturbine, oder gemäß der elektrischen Leistung der Gasturbine und dem elektrischen Gasturbinenwirkungsgrad nach folgendem Zusammenhang:

$$Q = \frac{P}{\eta_{GT}} - P$$

*P*: elektrische Gasturbinenleistung

$\eta_{GT}$: elektrischer Gasturbinenwirkungsgrad.

Aus dem Turmwirkungsgrad sowie der Wärmeleistung der Gasturbine kann folglich die elektrische Leistung des Aufwindkraftwerks nach folgendem Zusammenhang berechnet werden:

$$P_{\text{Aufwind}} = Q \cdot \eta$$

Die Veränderung des Gesamtwirkungsgrades, wie in FIG 4 dargestellt, lässt sich dann als Addition der Leistungen von Gasturbine und Aufwindkraftwerk leicht berechnen.

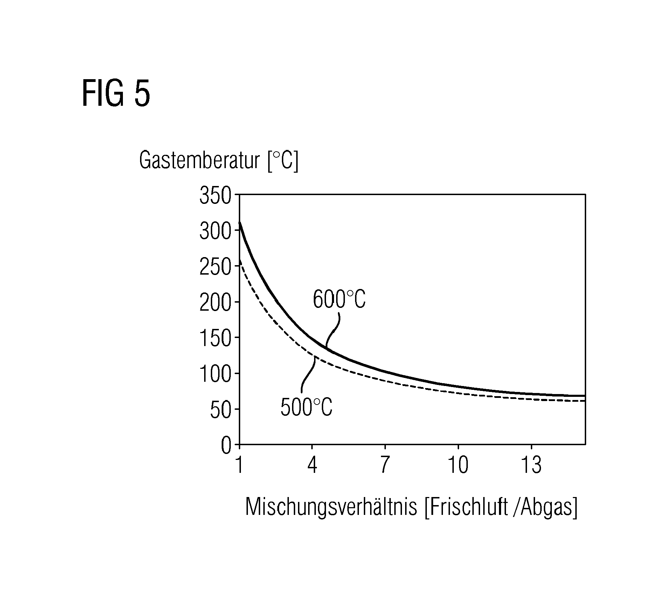

FIG 5 zeigt diagrammatisch die Veränderung der Gesamttemperatur einer Mischung aus Abgas und Frischluft entsprechend unterschiedlichen Mischungsverhältnissen. Hierbei wird die Veränderung der Gesamttemperatur für zwei unterschiedliche Abgastemperaturen dargestellt. Die gestrichelte Linie zeigt eine veränderliche Gesamttemperatur bei einer Abgastemperatur von 500°C, die durchgezogene Kurve zeigt eine Veränderung der Gesamttemperatur für eine Abgastemperatur von 600°C. Mittels der dargestellten Kurvenverläufe lässt sich abschätzen, welches Temperaturniveau die Mischung von Abgas mit Frischluft bei Eintritt in den Turm 12 aufweist. Das für eine konkrete Ausführungsform des Turmes 12 notwendige Temperaturniveau kann beispielsweise dem maximal zulässigen Temperaturniveau am Turm 12 entsprechen und kann aus der FIG 5 unmittelbar abgelesen werden.

Weitere Ausführungsformen ergeben sich aus den Unteransprüchen.

**Patentansprüche**

1. Kraftwerk (1) umfassend wenigstens eine Gasturbine (2) sowie wenigstens einen mit einer Stromerzeugungseinheit (11) versehenen Turm (12) zur Erzeugung von elektrischem Strom durch einen luftdynamischen Aufwind in dem Turm (12), wobei die Gasturbine (2) mit dem Turm (12) derart fluidtechnisch gekoppelt ist, dass wenigstens ein Teil des Abgases der Gasturbine (2) bei Betrieb durch den Turm (12) strömen kann.

2. Kraftwerk gemäß Anspruch 1,
**dadurch gekennzeichnet, dass** die Gasturbine (2) mit dem Turm (12) wenigstens teilweise mittels einer Strömungsleitung (13) fluidtechnisch gekoppelt ist.

3. Kraftwerk gemäß Anspruch 2,
**dadurchgekennzeichnet**, **dass** die Strömungsleitung (13) eine verschließbare Abzweigleitung (14) aufweist, über welche das Abgas einem Strömungsweg zugeleitet werden kann, welcher nicht in den Turm (12) mündet, sondern insbesondere in die freie Umgebung.

4. Kraftwerk gemäß einem der vorhergehenden Ansprüche 2 oder 3,
**dadurch gekennzeichnet, dass** die Strömungsleitung (13) eine Abschlussvorrichtung (15) umfasst, welche die Strömungsleitung (13) fluidtechnisch verschließt, insbesondere derart verschließt, dass kein Abgas dem Turm (12) zugeleitet werden kann.

5. Kraftwerk gemäß einem der vorhergehenden Ansprüche, **dadurch gekennzeichnet, dass** die Strömungsleitung (13) einen Strömungsabschnitt (20) aufweist, über welchen Frischluft dem Abgas zugeführt werden kann, damit sie sich mit dem Abgas vermischt, bevor und/oder während das Gemisch dem Turm (12) zugeleitet wird.

6. Kraftwerk gemäß Anspruch 5,
**dadurch gekennzeichnet, dass** der Strömungsabschnitt (20) am Ende der Strömungsleitung (13) angeordnet ist, insbesondere unterhalb des Turms (12) an dessen Basis.

7. Kraftwerk gemäß einem der vorhergehenden Ansprüche, **dadurch gekennzeichnet, dass** die Strömungsleitung (13) mit einem thermischen Wärmespeicher (30) fluidtechnisch derart gekoppelt ist, dass das Abgas, bevor es dem Turm (12) zugeleitet wird, mit dem Wärmespeicher (30) in thermischem Kontakt ist.

8. Kraftwerk gemäß Anspruch 7,
**dadurch gekennzeichnet, dass** der thermische Wärmespeicher (30) unterhalb des Turms (12) an dessen Basis angeordnet ist, insbesondere derart angeordnet ist, dass thermische Wärme durch den Wärmespeicher (30) über eine vorbestimmte Fläche (35) unmittelbar an die Umgebung der Basis abgegeben werden kann.

9. Kraftwerk gemäß Anspruch 8,
**dadurch gekennzeichnet, dass** die vorbestimmte Fläche (35) wenigstens 30%, insbesondere wenigstens 50% der senkrecht auf den Erdboden gerichteten Projektion der Eintrittsöffnung des Turms (12) überdeckt.

10. Kraftwerk gemäß einem der vorhergehenden Ansprüche 7 bis 9,
    **dadurch gekennzeichnet, dass** der Wärmespeicher (30) dazu geeignet ist, thermische Wärme bei einem Temperaturniveau von wenigstens 300°C, insbesondere von wenigstens 400°C zu speichern.

11. Kraftwerk gemäß einem der vorhergehenden Ansprüche 7 bis 10,
    **dadurch gekennzeichnet, dass** der Wärmespeicher (30) eine Vielzahl an Austrittsöffnungen aufweist, aus welchen das Abgas zur Mischung mit Frischluft ausströmen, insbesondere frei ausströmen kann.

12. Kraftwerk gemäß Anspruch 11,
    **dadurch gekennzeichnet, dass** die Vielzahl an Austrittsöffnungen unterhalb des Turms (12) an dessen Basis angeordnet ist.

13. Kraftwerk gemäß Anspruch 12,
    **dadurch gekennzeichnet, dass** das Kraftwerk (1) keinen Strömungsgenerator aufweist, welcher die zur Mischung mit dem Abgas vorgesehene Frischluft mit einer Strömung beaufschlagt.

14. Kraftwerk gemäß einem der vorhergehenden Ansprüche, **dadurch gekennzeichnet, dass** der Turm (12) ein Höhenniveau über dem Erdboden von höchstens 200 m, insbesondere von höchstens 150 m aufweist.

15. Verfahren zum Betrieb eines Kraftwerks (1) umfassend wenigstens eine Gasturbine (2) sowie wenigstens einen mit einer Stromerzeugungseinheit (11) versehenen Turm (12) zur Erzeugung von elektrischem Strom durch einen luftdynamischen Aufwind in dem Turm (12), wobei bei Betrieb der Gasturbine (2) dem Turm (12) derart Abgas zugeleitet wird, dass wenigstens ein Teil des Abgases durch den Turm (12) strömt und elektrischer Strom mittels der Stromerzeugungseinheit (11) erzeugt werden kann.

16. Verfahren zum Betrieb eines Kraftwerks (1) gemäß Anspruch 15,
    **dadurch gekennzeichnet, dass** dem Abgas Frischluft beigemischt wird, bevor es dem Turm (12) zugeleitet wird, insbesondere eine solche Menge an Frischluft beigemischt wird, dass das Temperaturniveau des Gemisches höchstens 200°C, insbesondere höchstens 120°C beträgt, wenn es dem Turm (12) zuströmt.

FIG 1

FIG 2

FIG 3

FIG 4

Wirkungsgradverbesserung
GT [Prozentpunkte]

30% GT eff.

40% GT eff.

Turmhöhe [m]

# FIG 5

Gastemberatur [°C]

Mischungsverhältnis [Frischluft /Abgas]

EP 2 674 592 A1

**Europäisches Patentamt**
**European Patent Office**
**Office européen des brevets**

# EUROPÄISCHER RECHERCHENBERICHT

Nummer der Anmeldung

EP 12 17 1899

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/025395 A1 (MICHAUD LOUIS MARC [CA]) 27. März 2003 (2003-03-27) * das ganze Dokument * * Seite 10, Zeile 23 - Seite 11, Zeile 2 * * Seite 11, Zeile 23 - Seite 12, Zeile 5 * * Seite 13, Zeile 29 - Seite 14, Zeile 5 * * Seite 16, Zeile 29 - Seite 17, Zeile 2 * * Abbildungen 1-4 * * Ansprüche 1,3,30 * ----- | 1,2,4, 14,15 | INV. F02C6/18 F03D9/00 ADD. F01D15/00 |
| X | DE 10 2007 045297 A1 (MATHIEU ERNST-ULRICH [DE]) 9. April 2009 (2009-04-09) * das ganze Dokument * * Absätze [0012] - [0014], [0033], [0040], [0047] - [0049] * * Abbildungen 1,2 * ----- | 1,2,4, 14,15 | |
| X A | US 2010/270807 A1 (MANNING DAVID WYLIE [US]) 28. Oktober 2010 (2010-10-28) * das ganze Dokument * * Absätze [0067], [0069], [0070] * * Abbildung 2 * ----- | 1,2 15 | |
| A | EP 2 083 169 A1 (FUCHS UTE [DE]) 29. Juli 2009 (2009-07-29) * das ganze Dokument * * Absätze [0020], [0022], [0023], [0025] - [0027] * * Abbildungen 1,2 * ----- | 1-16 | RECHERCHIERTE SACHGEBIETE (IPC) F01D F02C F03D |
| A | US 2009/212570 A1 (LE JOHN O [US] ET AL) 27. August 2009 (2009-08-27) * das ganze Dokument * * Abbildung 1 * ----- -/-- | 1-16 | |

Der vorliegende Recherchenbericht wurde für alle Patentansprüche erstellt

| Recherchenort | Abschlußdatum der Recherche | Prüfer |
|---|---|---|
| Den Haag | 8. November 2012 | Gombert, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes Dokument

EPO FORM 1503 03.82 (P04C03)

13

Europäisches
Patentamt

European
Patent Office

Office européen
des brevets

**EUROPÄISCHER RECHERCHENBERICHT**

Nummer der Anmeldung

EP 12 17 1899

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 29 31 349 A1 (BEUTEL DIPL ING HELMUT) 27. Mai 1981 (1981-05-27) <br> * das ganze Dokument * <br> * Ansprüche 1,2 * <br> * Abbildung 2 * <br><br> ----- | 1,7-13 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 8. November 2012 | Gombert, Ralf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...........................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 17 1899

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2012

| Im Recherchenbericht angeführtes Patentdokument | Datum der Veröffentlichung | Mitglied(er) der Patentfamilie | Datum der Veröffentlichung |
|---|---|---|---|
| WO 03025395 A1 | 27-03-2003 | CA 2460564 A1<br>US 2004112055 A1<br>WO 03025395 A1 | 27-03-2003<br>17-06-2004<br>27-03-2003 |
| DE 102007045297 A1 | 09-04-2009 | KEINE | |
| US 2010270807 A1 | 28-10-2010 | KEINE | |
| EP 2083169 A1 | 29-07-2009 | KEINE | |
| US 2009212570 A1 | 27-08-2009 | KEINE | |
| DE 2931349 A1 | 27-05-1981 | KEINE | |

EPO FORM P0461

Für nähere Einzelheiten zu diesem Anhang : siehe Amtsblatt des Europäischen Patentamts, Nr.12/82